# EUROPÄISCHE PATENTSCHRIFT

(11) **EP 2 220 750 B1**
(45) Veröffentlichungstag und Bekanntmachung des Hinweises auf die Patenterteilung: **10.04.2019**
(21) Anmeldenummer: 08858198.8
(22) Anmeldetag: 10.11.2008
(51) Int. Cl.: H02K 11/28, H02K 11/33, H02K 15/00

(54) **ELEKTROGERÄT, ELEKTRONIKMOTOR UND UMRICHTERMOTOR**
ELECTRICAL APPLIANCE, ELECTRONIC MOTOR AND CONVERTER MOTOR
APPAREIL ÉLECTRIQUE, MOTEUR ÉLECTRONIQUE ET MOTEUR À CONVERTISSEUR

(30) Priorität: 05.12.2007 DE 102007058880
(43) Veröffentlichungstag der Anmeldung: 25.08.2010
(73) Patentinhaber: SEW-EURODRIVE GmbH & Co. KG, 76646 Bruchsal (DE)
(72) Erfinder: MAYER, Ralph, 76698 Ubstadt-Weiher (DE)
(86) Internationale Anmeldenummer: PCT/EP2008/009477
(87) Internationale Veröffentlichungsnummer: WO 2009/071163

(56) Entgegenhaltungen:
- EP-A- 0 684 692
- EP-A2- 0 684 692
- DE-A1- 10 014 183
- DE-A1- 10 014 183
- DE-A1- 19 704 226
- DE-A1- 19 704 226
- DE-T5-112005 001 683
- DE-T5-112005 001 683

## Beschreibung

Die Erfindung betrifft einen Elektromotor mit integrierter Steuerelektronik.

Aus der DE 197 04 226 B4 ist als Elektronikmotor ein Umrichtermotor bekannt.

Aus der DE 197 04 226 A1 ist ein Umrichtermotor bekannt, bei dem auf dem Motorgehäuse ein Zwischenteil aufgesetzt ist, auf das wiederum ein Oberteil aufsetzbar ist. Dabei sind Zwischenteil und Motorgehäuse mit Klemmenkastenansatz zweistückig aufgebaut. Das Zwischenteil umgibt Anschlussvorrichtung seitlich, jedoch nicht nach oben oder nach unten. Aus dem Oberteil ragt ein Steckverbinder heraus zur Verbindung mit einem Gegensteckverbinder, welcher zu der Anschlussvorrichtung gehört.

Aus der EP 0 684 692 A2 ist in Spalte 3 Zeile 10 - 29 bekannt, an einer Elektronik eines Motors Wahlschalter anzuordnen, so dass bei verschiedenen Schalterstellungen verschiedene Betriebscharakteristiken ermöglicht sind. Die jeweilige Betriebscharakteristik hängt dabei von den Daten, also Parameterwerten, ab, welche von einem Programmiergerät heruntergeladen werden in den Speicher der Elektronik.

Aus der DE 11 2005 001 683 T5 ist eine Motorsteuereinrichtung bekannt.

Aus der DE 100 14 183 A1 ist eine elektrischer Motor und eine Anlage bekannt.

Der Erfindung liegt daher die Aufgabe zugrunde, ein Elektrogerät weiterzubilden.

Erfindungsgemäß wird die Aufgabe bei dem Elektromotor mit integrierter Steuerelektronik nach den in Anspruch 1 angegebenen Merkmalen gelöst.

Wichtige Merkmale der Erfindung bei dem Elektrogerät sind, dass es ein Unterteil und Oberteil umfasst, wobei das Oberteil auf das Unterteil aufsetzbar ist,
wobei im Unterteil elektrische Versorgungsleitungen und Leitungen zur Datenübertragung mit Anschlussvorrichtungen verbunden sind,
wobei das Oberteil einen Steckverbinder und das Unterteil einen entsprechenden Gegensteckverbinder umfasst,
wobei im Oberteil eine elektronische Schaltung, insbesondere mit Umrichter- oder Starter-Funktionalität, umfasst ist,
wobei an einer Innenseite des Oberteils ein Wahlschalter, insbesondere DIP-Schalter, vorgesehen ist,
wobei in einer ersten Schalterstellung das Elektrogerät betriebsbereit und nicht parametrierbar ist,
wobei in einer zweiten Schalterstellung das Elektrogerät betriebsbereit und parametrierbar ist.

Wichtige Merkmale der Erfindung bei dem Umrichtermotor sind, dass er einen Anschlusskasten umfasst, welcher ein auf ein Unterteil aufsetzbares Oberteil umfasst,
wobei das Oberteil einen Steckverbinder und das Unterteil einen entsprechenden Gegensteckverbinder umfasst,
wobei im Oberteil eine elektronische Schaltung, insbesondere mit Umrichter-Funktionalität, umfasst ist,
wobei an einer Innenseite des Oberteils ein Wahlschalter, insbesondere DIP-Schalter, vorgesehen ist,
wobei in einer ersten Schalterstellung der Umrichtermotor betriebsbereit und nicht parametrierbar ist,
wobei in einer zweiten Schalterstellung der Umrichtermotor betriebsbereit und parametrierbar ist.

Von Vorteil ist dabei, dass der Umrichtermotor mit erster Schalterstellung auslieferbar ist als Variante, die durch ungeschultes Bedienpersonal in die Anlage einbaubar ist, und bei geänderter Schalterstellung ausgeliefert oder verwendet werden kann, so dass durch geschultes Bedienpersonal eine aufwendige und umfangreiches Know-How erfordernde Parametrierung ausführbar ist. Vorzugsweise ist der Schalter an der Innenseite und wird somit nicht unabsichtlich bedient. Der Umrichter hat also zwei Betriebsvarianten und umfasst in seinem Speicher maschinenbezogene Parameter, die den Betrieb des vom Umrichter versorgten Elektromotors ermöglichen - auch ohne Parametrierung.

Bei dem obengenannten Elektrogerät sind die Vorteile entsprechend. Insbesondere ist also eine Veränderung der Betriebsart erst nach Öffnen des Geräts ausführbar. Das Elektrogerät kann beispielsweise ein Umrichtermotor oder auch ein abgesetzt vorgesehener Umrichter ohne Motor sein, wobei der Motor über Versorgungsleitungen mit dem Umrichter verbunden ist und von diesem gespeist wird. Dabei ist der Umrichter als dezentrales Gerät ausgeführt und somit in hoher Schutzart gefertigt, also auch sein Oberteil auf sein Unterteil dicht und lösbar verbunden.

Bei einer vorteilhaften Ausgestaltung ist zur Parametrierung eine Anschlussvorrichtung für eine Busverbindung zur Verbindung mit weiteren Busteilnehmern vorgesehen. Von Vorteil ist dabei, dass die Parametrierung und/oder der Datenaustausch über eine Busverbindung, also auch aus der Ferne, ausführbar ist. Insbesondere sind in einem Zentralrechner oder Busteilnehmer Parameter und/oder Daten für den Umrichtermotor hinterlegbar und nach dessen Einbau in der Anlage an diesen übermittelbar. Somit ist ein vorgesehener Datensatz nach Einbau automatisiert an den Umrichtermotor übertragbar.

Bei einer vorteilhaften Ausgestaltung ist zur Parametrierung eine Busverbindung mittels Aufmodulation höher frequenter Wechselstromanteile auf die Versorgungsleitungen vorgesehen. Von Vorteil ist dabei, dass keine separate Busleitung sondern nur die Leistungskabel verbindbar sind. Vorzugsweise wird die elektrische Leistung von den Leistungskabeln induktiv übertragen, also berührungslos.

Bei einer vorteilhaften Ausgestaltung ist der Wahlschalter nach Abheben des Oberteils vom Unterteil zugänglich. Von Vorteil ist dabei, dass bei Auslieferung des Umrichtermotors eine unbeabsichtigte Bedienung des Schalters vermieden ist. Nur nach Abheben des Oberteils ist eine Veränderung der Schalterstellung ausführbar. Somit ist die Sicherheit erhöht.

Bei einer vorteilhaften Ausgestaltung sind bei der Parametrierung maschinenbezogene Parameter und/oder Beschleunigungsrampen-Parameter veränderbar. Von Vorteil ist dabei, dass in der entsprechenden Schalterstellung die im Speicher des Umrichters hinterlegten Werte unwirksam machbar sind und die neu übertragenen Werte für das Regelverfahren und die Software verwendbar sind. Somit sind die Parameter auf die jeweilige Anlage oder Maschine anpassbar, in welcher der Umrichtermotor einbaubar ist.

Bei einer vorteilhaften Ausgestaltung umfasst der Umrichtermotor einen nichtflüchtigen Speicher, in welchem bei Herstellung maschinenbezogene Parameter und/oder Beschleunigungsrampen-Parameter hinterlegt sind, die den Werten von physikalischen Größen des Elektromotors entsprechen. Von Vorteil ist dabei, dass bei Herstellung schon einderartiger Parameter-Datensatz in den Umrichter hinterlegbar ist, dass der Umrichtermotor betriebsfähig ist. Insbesondere sind die maschinenbezogenen Daten abgestimmt auf die Werte physikalischer Größen des Elektromotors des Umrichtermotors.

Bei einer vorteilhaften Ausgestaltung ist der Umrichtermotor induktiv versorgbar, insbesondere wobei er eine an als Primärleiter wirksame Leistungskabel induktiv gekoppelte Sekundärwicklung umfasst, der eine Kapazität parallel oder seriell zugeschaltet ist, so dass die zugehörige Resonanzfrequenz der Frequenz eines in die Primärleiter eingespeisten mittelfrequenten Wechselstromes entspricht, insbesondere zwischen 10 und 100 kHz. Von Vorteil ist dabei, dass eine berührungslose Energieversorgung mit hohem Wirkungsgrad ausführbar ist, insbesondere auch bei schwacher induktiver Kopplung.

Weitere Vorteile ergeben sich aus den Unteransprüchen.

Die Erfindung wird nun anhand von Abbildungen näher erläutert:

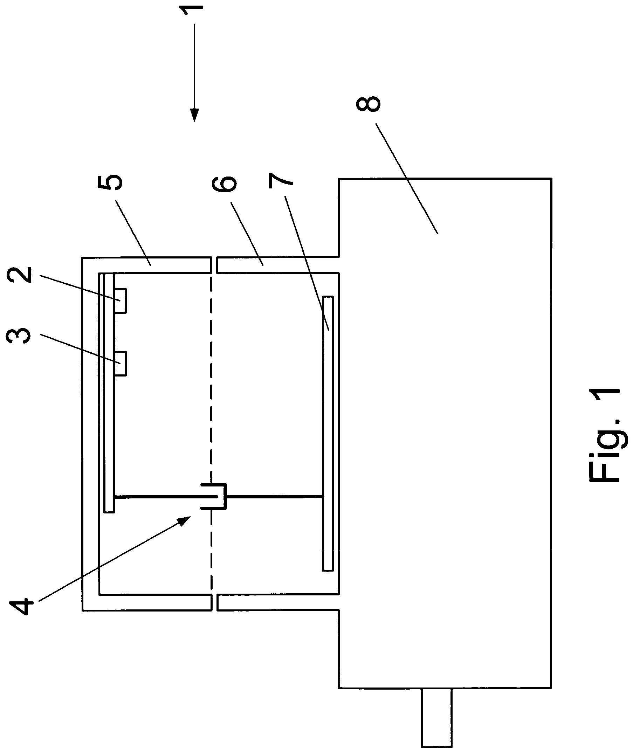

In der Figur 1 ist eine erfindungsgemäße Vorrichtung schematisch skizziert. Der Umrichtermotor 1 umfasst einen Elektromotor 8 und eine elektronische Schaltung zur Versorgung des Elektromotors 8, die in einem Deckel oder Oberteil 5 des Anschlusskastens vorgesehen ist. Diese Schaltung weist beispielsweise die Funktionalität eines Umrichters auf.

Die Schaltung ist auf einer Leiterplatte vorgesehen, auf der elektronische Bauelemente 3 und auch ein Wahlschalter 2 vorgesehen sind. Die Leiterplatte ist mittels einer elektrischen Steckverbindung 4 mit einem an einem im Unterteil 6 vorgesehenen Träger 7 vorgesehenen Steckverbinderteil verbindbar und somit sind die Versorgungsleitungen mittels einer Kabeldurchführung in den Anschlusskasten hinein führbar. Auf dem Träger 7, beispielsweise einer Leiterplatte, befinden sich elektrische Leitungen, über welche die Versorgungsleitungen mit dem Steckverbinderteil verbunden sind und somit eine Versorgung der Schaltung im Oberteil über die Steckverbindung ermöglicht ist. Ebenso sind die Anschlussleitungen für die Statorwicklungen über die Steckverbindung ins Oberteil geführt.

Die Schaltung ist einphasig oder mehrphasig versorgbar. Aus der versorgenden Wechselspannung wird eine unipolare Zwischenkreisspannung erzeugt, aus welcher ein von einer Steuerelektronik ansteuerbarer Wechselrichter versorgt ist. Am Wechselrichter ausgangsseitig sind die Statorwicklungen elektrisch verbunden.

Die Steuerelektronik umfasst auch einen Rechner, wie Mikrocontroller oder Mikroprozessor, samt Speicher. Im Speicher sind Parameterwerte hinterlegbar zur Beschreibung verschiedener Eigenschaften. Hierzu zählen auch physikalische Daten, die kennzeichnend sind für den Elektromotor, insbesondere dessen Stator und Rotor. Beispielsweise gehören hierzu Induktivitätswerte und Werte von Ohmschen Widerständen. Solche Parameterwerte werden verwendet zur Modellierung des Elektromotors, also der elektrischen Maschine, in einem von der Software umfassten Regelverfahren

Der Speicher umfasst hierbei einen nichtflüchtigen Bereich, in welchem bei Herstellung des Umrichtermotors Parameterwerte eingeschrieben werden.

Die Schaltung umfasst darüber hinaus eine Busleitung zum Datenaustausch mit weiteren Busteilnehmern oder einem Rechner.

In einer ersten Stellung des Wahlschalters werden für das Regelverfahren die bei Herstellung eingeschriebenen Parameter verwendet. Vorteiligerweise ist somit eine Anpassung der Parameter nicht notwendig und der Umrichter ist sofort betriebsbereit. Der Schalter ist hierbei nicht von außen direkt zugänglich sondern es muss das Oberteil 5 vom Unterteil 6 getrennt und abgelöst werden, damit der Wahlschalter zugänglich und betätigbar ist. Somit ist eine ungewollte oder fehlerhafte Betätigung des Wahlschalters vermieden. Der Umrichtermotor ist also von einem Bedienpersonal in der Anlage mechanisch einbaubar und mit den Versorgungsleitungen anschließbar. Das Bedienpersonal muss kein weiteres Wissen über Umrichter, Reglerverfahren, Beschleunigungsrampen-Parameter des Umrichters oder maschinenbezogenen Parameter aufweisen. Denn das bloße Verbinden der Versorgungsleitungen genügt zur Inbetriebnahme des Umrichtermotors.

In einer anderen Schalterstellung des Wahlschalters sind die von der Regelung verwendeten Parameterwerte veränderbar. Auf diese Weise ist eine Optimierung an die jeweilige Anlage ausführbar. Es sind also Beschleunigungsrampen-Parameter oder maschinenbezogenen Parameter veränderbar und in den beschreibbaren Teil des Speichers einschreibbar. Nach dem mechanischen Einbau in die Anlage erfolgt also eine Parametrierung des Umrichtermotors durch Bedienpersonal, welches ein entsprechendes Wissen hierüber benötigt.

### Bezugszeichenliste

1 Umrichtermotor
2 Wahlschalter
3 elektronisches Bauelement
4 Steckverbindung
5 Oberteil
6 Unterteil
7 Träger
8 Elektromotor

## Patentansprüche

1. Elektromotor mit integrierter Steuerelektronik,
aufweisend einen Elektromotor (8) und eine elektronische Schaltung zur Versorgung des Elektromotors (8),
umfassend einen Anschlusskasten, welcher ein auf ein Unterteil (6) aufsetzbares Oberteil (5), also Deckel, umfasst,
wobei das Oberteil (5) einen Steckverbinder und das Unterteil (6) einen zum Steckverbinder entsprechenden Gegensteckverbinder umfasst
und somit eine Versorgung der Schaltung im Oberteil über die Steckverbindung ausgeführt ist und die Anschlussleitungen für die Statorwicklungen des Elektromotors (8) über die Steckverbindung aus der im Oberteil angeordneten elektronischen Schaltung geführt sind,
**dadurch gekennzeichnet, dass**
im Oberteil (5) eine elektronische Schaltung mit Umrichter-Funktionalität umfasst ist,
wobei an einer Innenseite des Oberteils (5) ein als DIP-Schalter ausgeführter Wahlschalter (2) vorgesehen ist,
wobei in einer ersten Schalterstellung der Elektronikmotor betriebsbereit und nicht parametrierbar ist, wofür der Umrichtermotor (1) einen nichtflüchtigen Speicher umfasst, in welchem bei Herstellung maschinenbezogene Parameter und Beschleunigungsrampen-Parameter hinterlegt sind, die den Werten von physikalischen Größen des Elektromotors (8) entsprechen,
wobei in einer zweiten Schalterstellung der Umrichtermotor (1) betriebsbereit und parametrierbar ist,
wobei der Wahlschalter (2) nach Abheben des Oberteils (5) vom Unterteil (6) zugänglich ist,
wobei zur Parametrierung eine Anschlussvorrichtung für eine Busverbindung zur Verbindung mit weiteren Busteilnehmern vorgesehen ist,
wobei zur Parametrierung eine Busverbindung mittels Aufmodulation höher frequenter Wechselstromanteile auf die Versorgungsleitungen vorgesehen ist,
wobei bei der Parametrierung maschinenbezogene Parameter und/oder Beschleunigungsrampen-Parameter veränderbar sind.

2. Elektromotor nach Anspruch 1,
**dadurch gekennzeichnet, dass**
die elektronische Schaltung Umrichter-Funktionalität aufweist und der Elektronikmotor ein Umrichtermotor (1) ist.

3. Elektromotor nach Anspruch 1,
**dadurch gekennzeichnet, dass**
die elektronische Schaltung Starter-Funktionalität aufweist, insbesondere als Sanftanlaufgerät ausgeführt ist, und der Elektronikmotor ein Startermotor ist.

4. Elektromotor nach mindestens einem der vorangegangenen Ansprüche,
**dadurch gekennzeichnet, dass**
der Umrichtermotor (1) induktiv versorgbar ist, insbesondere wobei er eine an als Primärleiter wirksame Leistungskabel induktiv gekoppelte Sekundärwicklung umfasst, der eine Kapazität parallel oder seriell zugeschaltet ist, so dass die zugehörige Resonanzfrequenz der Frequenz eines in die Primärleiter eingespeisten mittelfrequenten Wechselstromes entspricht, insbesondere zwischen 10 und 100 kHz.

## Claims

1. Electric motor with integrated control electronics, having an electric motor (8) and an electronic circuit for supplying the electric motor (8),
comprising a terminal box which comprises an upper part (5), that is to say a lid, which can be placed onto a lower part (6),
wherein the upper part (5) comprises a plug-in connector and the lower part (6) comprises a mating plug-in connector corresponding to the plug-in connector,
and thus a supply to the circuit in the upper part is formed by way of the plug-in connection, and the connection lines for the stator windings of the electric motor (8) are guided by way of the plug-in connection from the electronic circuit arranged in the upper part,
**characterized in that**
an electronic circuit with converter functionality is encompassed in the upper part (5),
wherein a selector switch (2) configured as a DIP switch is provided on an inner side of the upper part (5),
wherein in a first switch position the electronic motor is ready for operation and cannot be parameterized, for which purpose the converter motor (1) comprises a non-volatile memory in which machine-related parameters and acceleration ramp parameters are stored at the time of manufacture, said parameters corresponding to the values of physical variables of the electric motor (8),
wherein in a second switch position the converter motor (1) is ready for operation and can be parameterized,
wherein the selector switch (2) is accessible once the upper part (5) has been lifted away from the lower part (6), wherein, for the parameterization, a connection device is provided for a bus connection for connecting to further bus subscribers,
wherein, for the parameterization, a bus connection is provided by modulating higher-frequency AC components onto the supply lines,
wherein, during the parameterization, machine-related parameters and/or acceleration ramp parameters can be changed.

2. Electric motor according to claim 1,
**characterized in that**
the electronic circuit has converter functionality and the electronic motor is a converter motor (1).

3. Electric motor according to claim 1,
**characterized in that**
the electronic circuit has starter functionality, in particular is configured as a soft starter, and the electronic motor is a starter motor.

4. Electric motor according to at least one of the preceding claims,
**characterized in that**
the converter motor (1) can be inductively supplied, in particular wherein it comprises a secondary winding which is inductively coupled to power cables which act as a primary conductor, a capacitor being connected in parallel or in series with said secondary winding such that the associated resonant frequency corresponds to the frequency of a medium-frequency alternating current that is fed into the primary conductor, in particular between 10 and 100 kHz.

## Revendications

1. Moteur électrique à électronique de commande intégrée,
comprenant un moteur électrique (8) et un circuit électronique affecté à l'alimentation dudit moteur électrique (8),
incluant un boîtier de raccordement comportant une partie supérieure (5), c'est-à-dire un couvercle, pouvant être mise en place sur une partie inférieure (6),
ladite partie supérieure (5) et ladite partie inférieure (6) étant pourvues, respectivement, d'un connecteur enfichable et d'un connecteur enfichable complémentaire, correspondant audit connecteur enfichable,
si bien qu'une alimentation du circuit est assurée au moyen de la connexion par enfichage, dans la partie supérieure, et que les conducteurs de raccordement destinés aux enroulements statoriques du moteur électrique (8) sortent, par l'intermédiaire de ladite connexion par enfichage, du circuit électronique situé dans ladite partie supérieure, **caractérisé par le fait**
**qu'**un circuit électronique à fonctionnalité de convertisseur est inclus dans la partie supérieure (5),
un commutateur (2), réalisé sous la forme d'un interrupteur DIP, étant prévu à la face intérieure de ladite partie supérieure (5),
sachant que, dans une première position de commutation, le moteur électronique est prêt à fonctionner et n'est pas paramétrable, le moteur-convertisseur (1) étant doté, à cette fin, d'une mémoire non volatile dans laquelle sont stockés, au stade de la fabrication, des paramètres relatifs à la machine et des paramètres relatifs à des rampes d'accélération qui correspondent aux valeurs de grandeurs physiques du moteur électrique (8),
sachant que ledit moteur-convertisseur (1) est prêt à fonctionner et est paramétrable dans une seconde position de commutation,
ledit commutateur (2) étant accessible après que la partie supérieure (5) a été soulevée à l'écart de la partie inférieure (6),
sachant qu'un dispositif de raccordement, dévolu à une connexion de bus en vue de la liaison avec d'autres périphériques de bus, est prévu à des fins de paramétrage,
une connexion de bus étant prévue à des fins de paramétrage au moyen d'une modulation, sur les conducteurs d'alimentation, de composantes de courant alternatif à fréquence supérieure,
sachant que des paramètres relatifs à la machine, et/ou des paramètres relatifs à des rampes d'accélération, peuvent être modifiés au cours du paramétrage.

2. Moteur électrique selon la revendication 1,
**caractérisé par le fait que**
le circuit électronique présente une fonctionnalité de convertisseur, et le moteur électronique est un moteur-convertisseur (1).

3. Moteur électrique selon la revendication 1,
**caractérisé par le fait que**
le circuit électronique présente une fonctionnalité de démarreur et est réalisé, en particulier, sous la forme d'un appareil de démarrage en douceur, le moteur électronique étant un moteur de démarreur.

4. Moteur électrique selon au moins l'une des revendications précédentes,
**caractérisé par le fait que**
le moteur-convertisseur (1) peut être alimenté en mode inductif, sachant qu'il inclut notamment un enroulement secondaire qui est couplé, par induction, à des câbles de puissance agissant comme des conducteurs primaires, et auquel un condensateur est connecté en parallèle ou en série, de sorte que la fréquence de résonance associée correspond à la fréquence d'un courant alternatif à fréquence moyenne notamment comprise entre 10 et 100 kHz, injecté dans lesdits conducteurs primaires.
